# EUROPEAN PATENT APPLICATION

(11) **EP 4 821 908 A1**
(43) Date of publication of application: **14.10.2026**
(21) Application number: 25472004.8
(22) Date of filing: 09.04.2025
(51) Int. Cl.: C05C 11/00, C05F 11/00, C05F 17/90, C02F 1/46

(54) **METHOD AND EQUIPMENT FOR THE PRODUCTION OF LIQUID BIOFERTILIZERS FROM CARBON DIOXIDE UTILIZATION**

(71) Applicant: EKOBIOTECHPRODUCT LTD, 9000 Varna (BG)
(72) Inventor: Georgiev, Georgi Slavchev, 9000 Varna (BG); Georgiev, Slavcho Georgiev, 9000 Varna (BG); Georgieva, Sevdalina Slavcheva, 9000 Varna (BG)
(74) Representative: Benatov, Samuil Gabriel

(57) **Abstract**

Method and system for production of liquid biofertilizer with carbon dioxide utilization according to the invention, allowing the conversion of harmful gases, such as carbon dioxide, NO 2 and others into useful compounds suitable for application in agriculture or food chains to improve crop yields and quality. In addition, the invention optimizes the production process, whereby the production of biofertilizer is carried out by mixing water with gas fractions, oxygen and ground solid fractions. The processing of these raw materials is carried out in a reactor with high-voltage discharges, creating high temperature and high pressure, whereby solids and gases decompose, dissolve in water and thus new useful compounds are obtained for plants nourishing. Inoculants are added to the resulting mix of water, solutions and compounds, contributing to development of beneficial microorganisms.

## Description

### FIELD OF INVENTION

The invention concerns production of liquid biofertilizer from gas fractions utilization, such as carbon dioxide utilization. Processing biological materials by means of electropulsing plasma treatment is suitable for application in agriculture or households.

### STATE OF THE ART

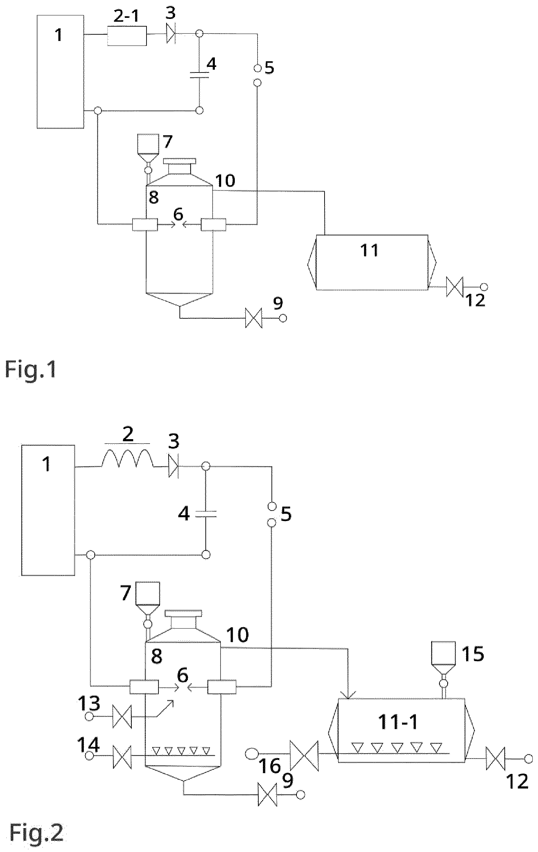

An electropulse plasma system for the production of liquid biofertilizer is shown in Fig. 1. Different types of liquid biofertilizers are obtained from the decomposition and dissolution of solid ground raw materials under a high-voltage discharge in water, obtained between the high-voltage electrodes 6, powered by the energy of accumulated electric charge in a condenser 4. The condenser is powered by a charging resistor 2 and a high-voltage rectifier 3 connected in series, for example a high-voltage diode from a high-voltage power source 1. Condenser 4 accumulates energy for a relatively long time - up to one second and after that a discharge is obtained in arrester 5. The accumulated energy in condenser 4 is fed through the arrester 5 to the high-voltage electrodes 6, where occurs a powerful electric discharge. The timing of this discharge is relatively short - from one up to few microseconds. The electrodes 6 are isolated from the hull, located in an aqueous environment. This discharge between the electrodes 6 creates a zone of high pressure and high temperature, generating a shock wave. After the shock wave has passed, a low-pressure zone is formed, which further forms a return wave, creating a zone of cavitation until the waves fade away. These extreme conditions affect the chemical compounds, leading to decomposition of stable compounds and formation of new compounds. Also the generated shock waves crush the solid raw materials in the discharge zone and help to quickly dissolve the ground raw materials in the water. The electrodes 6 are insulated and installed in a cylindrical steel reactor 8, fed with water through gland 9. At the top of reactor 8 are fed solid ground raw materials, such as peat, soil or other by means of a hopper and a dispenser 7. In the electrode discharge zone 6, these solid raw materials are crushed and dissolved in water. Outgoing end products are obtained through an outlet gland 10 at the top of the reactor 8 and passes into the sediment tank. The frequency of obtaining the electric discharge is controlled from the distance between the arrester 5, the electrodes 6, the fluid state in reactor 8 and other secondary conditions.

The end product is obtained as a mix of various compounds of water, hydrogen, oxygen and digested solid additives which under the influence of high-voltage discharge, obtained between electrodes 6, change their composition and form new compounds suitable for liquid biofertilizer. The process occurs because of the generation of forward and reverse shock waves from the powerful electric field in plasma (high-voltage discharge) and affects the substances in the discharge zone. This leads to the destruction of bonds between the substance molecules in the discharge area and creation of new bonds and substances, as a large part of the hard-to-dissolve components dissolve in water and are suitable for assimilation by plants.

The main characteristic of the high-voltage source 1 is that it generates a highly alternating voltage, over 30 kV, which is rectified by a high-voltage rectifier 3, connected in series to a load resistor 2, which determines the charge time of condenser 4. The charge time of the condenser is much longer - 10 to 4 up to 10 to 6 times the discharge time, which allows accumulation of a powerful discharge, in the order of several MW, when charging the condenser from a low-power source - several kW.

Characteristic feature of this familiar device is obtaining end production carried out by a powerful high-voltage arc between the two electrodes in an aqueous medium in a reactor. Resulting high pressures, high temperatures and shock waves affect the raw materials by decomposing water and other persistent compounds dissolving in water, forming new compounds and solutions of hard to dissolve components.

The main disadvantage of the system implemented by this method is the impossibility to process harmful gas emissions such as carbon dioxide, NO 2 and others. Another disadvantage is the unsuitability of the system for obtaining complex fertilizer compounds.

Another disadvantage of the system is that it is not adapted for additional processing of the resulting compounds.

Another disadvantage of the system is that there are large losses in the charging resistor, due to power losses in the charging current through the resistor and the voltage drop of the mentioned resistor.

### SUMMARY OF THE INVENTION

The purpose of the present invention is to further develop the existing system for the production of liquid biofertilizer by creating a system for production of liquid biofertilizer by utilization of carbon dioxide in liquid fertilizers with a wide range of composition; to enrich the finished product with additional compounds and bacteria, which creates a condition for additional enrichment and maturation of liquid fertilizers. It also aims the development of microorganisms supporting the growth and facilitating the uptake of liquid fertilizers by plants, as it also contributes to reduce the energy loss from condenser charge through the charging resistor.

This task is solved by creating a system for production of liquid biofertilizer by utilizing carbon dioxide in liquid biofertilizer with the means of a high-voltage discharge that decomposes carbon dioxide (C) and oxygen (O2), decomposes water into hydrogen (H2) and oxygen (O2), whereby carbon binds to hydrogen (H2) and nitrogen (H2), then passes into the urea part of the liquid fertilizers and oxygen binds to the hydrogen and nitrogen, then passes in the nitrate part of liquid fertilizers.

In particular, the system for production of liquid fertilizers with the utilization of carbon dioxide, according to the invention, includes a reactor for liquid fertilizers with a body that in the working position has an upper and a lower part, between which in an aqueous environmental are positioned a pair of metal electrodes. Electrodes are further insulated from the mentioned reactor body by a high voltaic insulating means. At the top part is connected a dosing system for supply of solid ground organic materials. A water inlet gland is also connected to the reactor. A settling tank for the end product is connected to the upper part of the reactor through an outlet pipe for mixed raw materials, having in working position an upper and a lower end, as the connection to the reactor is at the upper end of the settling tank and an outlet gland for end products is installed at the lower end of the settling tank. The system also has a power source for current, connected to supply high voltage through a high-voltage rectifier to a high-voltage condenser, connected to supply accumulated energy through a high-voltage arrester to the first electrode of the pair of electrodes. Electrodes are configured to supply in case of need electric discharge in a high-pressure and high-temperature area, located between the mentioned electrodes in the reactor body. The high-voltage condenser is connected to the second electrode of the pair of metal electrodes through a common connection point to provide a mass that is also connected to the power source. A charging choke is located between the power source and the high-voltage evaporator, configured to form a resonant circuit to limit the charge current of the condenser and determine the charge time of the condenser. A nitrogen inlet gland is connected to the bottom of the reactor. A carbon dioxide inlet gland directed at the electrodes is also connected to the reactor. An automated control system is connected to the reactor, configured to analyze the nitrogen levels in the mix of raw materials, located in the reactor and compare them through a logic block with predetermined reference values. The automated control system is also connected to the settling tank and it is configured to analyze nitrogen levels via sensors located in the settling tank. The nitrogen levels ire further compared through a logical block with a pre-existing certain reference value.

Preferably, an inlet nozzle is installed at the lower end of the settling tank for supplying pressurized air from a compressor.

Preferably, a dosing vessel is connected to the upper end of the tank with system capable to receive commands from controller of the automated control system for periodic submission of additives added to the processed mixed raw material. This controller is connected to the settling tank to analyze through the tank sensors the additive levels in the processed mixed raw material and compare them through a logical block with predetermined reference values.

Preferably, the water inlet nozzle is connected to the bottom of the reactors, thus pushing the output production and reducing the possibility of forming stagnant zones from end products.

Alternatively, the water inlet nozzle can also be connected to another part of the reactor. Additional agitators may also be provided in the reactor to mix the end products.

In a preferred embodiment of the invention, the automated control system also includes:
- database configured to archive data from analyses and additions of additives;
- communication module ensuring remote control from external device, and
- data processor configured to visualize the data on a visualizing device.

According to the invention, method for production of liquid biofertilizer by carbon dioxide utilization is created in a manner that requires a small amount of electricity. The method includes the following steps:
- loading water and a mix of solid ground organic materials into reactor for liquid fertilizers;
- supplying a powerful electrical impulse to the electrodes in the reactor, repeated many times until reaching the predetermined target nitrogen concentration in the raw material mix; analyzing the composition of the raw materials in certain periods in range of 0.1 to 1 second, depending on the power electrical impulse and the hardness of the raw materials; resulting in formation of processing area for the incoming raw materials into mentioned reactor through a high voltaic discharge for a period of 5 to 30 minutes under a high pressure from 10 000 up to 100 000 bar, for example from 30 000 to 80 000 bar, and high temperature - from 10,000 up to 40,000 °C, e.g. 30,000°C; implementing cavitation in mentioned reactor due to the raw material processing under pressure waves, vacuum, thermal impact, expansion and contraction. The analysis for determination of the target nitrogen concentration in the mix of raw materials and determination of the recurrence period at high voltaic discharge is carried out through an Automated Control System /ACS/;

- simultaneously with the process of high-voltage treatment through the heat impact and cavitation, in the reactor occurs feeding with a gas mix of nitrogen, carbon dioxide and water, resulting in the destruction of solids and breakdown of chemical compounds, and thus the formation of new organic compounds from the substances that have broken down in the mentioned reactor;
- transfer of the end mix of raw materials from mentioned reactor to the upper end of the settling tank;
- stay of the end mix in the settling tank for a period of 7 to 14 days, as nitrogen-fixing bacteria develop in the mixed raw material, as well as other microorganisms;
- carrying out a periodic analysis of the mixed raw material during its stay in the tank, as the analysis relates to the levels of nitrogen, micro substances (also called trace elements) and microorganisms in the processed mixed raw material; feeding the sensors data to a logic unit of an automated control system, which compares the analyzed composition of the mixed raw material with a predetermined composition intended for a given soil and a given crop, then gives a command for additional additives periodically fed into the tank; resulting in an explosive development of micro-organisms and nitrogen-fixing bacteria and increases of the nitrogen level in the end product to the required level; after reaching the additives content in the processed mixed raw material according to a predetermined threshold, intended for the given soil and the given crop, the periodic supply is suspended until a value is reported again below the specified threshold. The periodic analysis of the mixed raw material during the stay in the tank is carried out through the Automated System for Control /ACS/;
- removal of end products from the lower end of the settling tank.

The Automated Control System (ACS) consists of hardware and software. The hardware includes sensors, controller and actuators. Software mainly includes remote control and three programs: a visualization program, a program for management and backup program. The ACS works on the following manner: sensors show the composition of substances mix in the treatment reactor and pass received data to the controller. Controller has a control program that shows whether the mix is ready based on the presented values of its composition.

Preferably, the tank is pressurized by a compressor atmospheric air, which bubbles in the tank to stir and homogenize the mixed raw material for faster and more efficient development of the nitrogen-fixing bacteria and other microorganisms.

Preferably, a periodic analysis of the mixed raw material occurs during the stay in the settling tank, showing the levels of micronutrients and microorganisms in the processed mixed raw material; sensor data are fed to a logic unit of an automated system in order to compare the analyzed composition of the mixed raw material with the predetermined composition intended for a given soil and a given crop; giving a command for periodic feeding to the tank of additives mixed with raw material until reaching a predetermined threshold intended for the given soil and the given culture.

Preferably, an automated control system backs up the entire analyzed information and given commands to the database.

Preferably, the automated control system receives commands through a communication module from an external device.

Preferably, an automated control system collects processed data from analysis and sent commands to the visualizer device.

The invention provides an optimized production of liquid biofertilizer with utilization of carbon dioxide, as the liquid biofertilizer is rich in nitrates, nitrites, urea, minerals, bacteria and it is easily absorbed by plants. The end product is highly concentrated of useful substances, low carbon footprint, high concentration of beneficial microorganisms. The presence of molecular carbon and comfortable living conditions of microorganisms support the growth and development of plants.

The invention provides an optimized processing of gas fractions, such as carbon dioxide in liquid fertilizer, together with the ability to produce complex liquid fertilizer. Additionally, it provides low electricity costs, possibility of additional processing of end products, according to the needs of individual plants, soil, cultivation method, etc.

### DESCRIPTION OF THE ATTACHED FIGURES

Further in the description, the system for production of liquid biofertilizer with utilization of carbon dioxide, subject to the invention is clarified by preferred employability. Given embodiments do not limit the scope of the invention. Examples are given with reference to the attached figures, where:
Figure 1 represents the technological scheme of the known technique system for production of liquid biofertilizer.
Figure 2 presents the technological scheme of a preferred system for production of liquid biofertilizer with the utilization of carbon dioxide, according to the invention.
Figure 3 shows the concentric zones around the electrodes.

### EXEMPLARY EMBODIMENTS OF THE INVENTION

The system for production of liquid biofertilizer with the utilization of carbon dioxide, as shown in Figure 1, consists of a reactor for treatment of raw materials 8, which is a cylindrical metal or plastic body, playing the role of a tank, in the upper part of which are installed dosing solid organic materials system 7, output for the resulting mix of processed raw materials 10. In the central part of the reactor 8 are installed electrodes 6 for obtaining electrical discharges through high voltage discharger 5 and in the lower part are installed a water inlet 9, an inlet for nitrogen 14 and carbon dioxide inlet 13.

Solid organic raw materials are nutrient-rich raw materials, such as e.g. peat, California worm manure, animal manure, earth sediments, Leonardite and others, known from the level of the art.

Electrodes 6 are metal electrodes with increased resistance to wear discharges from high-voltage pulses. They are installed in the middle of reactor 8 and are used to obtain a high-voltage discharge. The distance between these electrodes is adjustable from 5 to 25 mm, depending on the environment, the purpose of the resulting production, etc. The pair of metal electrodes 6 are isolated from the reactor body 8, in particular the wires that supply electricity to the electrodes 6 are insulated with high-voltage insulation. The reactor 8 is zeroed so that it is not energized. The electrodes 6 are insulated with Teflon, Viton or other high-voltage insulators. Peak high-voltage energy with high power of approximately 1 MW is periodically supplied to the electrodes 6. This energy is obtained by accumulating high voltage at the electrodes from a power supply source 1 through a series connected charging choke 2, high voltage rectifier 3 and high voltage condenser 4. The charging choke 2 limits the charge current of the condenser 4 and determines the charge time of the condenser. Power source 1 is a high-voltage source with low power, a single-phase or three-phase step-up transformer for increasing 230/400 V up to 50 Hz to 20 or 40 kV required to produce high-voltage discharges.

It is possible that the power source 1 is a high-frequency converter of voltage input to high voltage with high frequency /20 to 100 kHz/, which generates a high constant voltage with value from 20 to 50 kV.

The high-voltage condenser 4 consists of one or more high-voltage condensers connected in series to provide the necessary operating voltage from 20 to 50 kV or in parallel in order to provide the required capacity from 0.1 to 2 microfarads.

The charging choke 2 is a coil with high voltage insulation on an electromagnetic core and usually has a value in the range of 0.1 to 10 Henry. The net value determines the magnitude of the charge current of the condenser 4 and determines the charge time of the condenser 4. During the charge time of the condenser 4 an electro-magnetic energy is accumulated, which at the end of the charge when the choke magnetic core is saturate is further transferred to the condenser 4. In this way, the charge voltage of the condenser 4 is doubled and the electricity consumption is reduced.

The high-voltage rectifier 3 is a rectifier that converts alternating voltage into a constant voltage. It can be implemented as a single-way, double-way rectifier, Graetz circuit, a multiplier of 2, 3 or more, depending on the step-up transformer and the required voltage.

The high-voltage arrester 5 consists of two metal electrodes with a distance of 2 to 10 mm, which are used to determine the period of supply of electrical pulses to electrodes 6 in reactor 8. They can be airborne with adjustable distance or controllable. Air arresters are used at lower supply voltages of about 20-30 kV. Controllable hermetic kenotrons are used at medium voltages of 30-40 kV. For high voltages - over 40 kV are made controllable arresters - with rotating disks, movable electrodes or others.

The values of the charging choke 2 and condenser 4 determine the so-called charging circuit time constant, as in addition to determining the charging time of condenser 4, they double the voltage of condenser 4 and reduce the charging losses of condenser 4. The choke 2, together with the condenser 4, form a resonant circuit and during the charge in choke 2 inductive energy accumulates, which, after saturation of the choke 2, is transmitted to the condenser 4, thus, in addition reduces the losses in the charging circuit and the voltage of the condenser 4 is doubled. It is calculated when the choke 2 is saturated, so that to form a resonant circuit together with the condenser 4. Choke 2 is always saturated at the same time and this time is pre-calculated. If it is necessary to change the timing, choke windings 2 are selected. The choke 2 and condenser 4 form a resonant oscillating circuit. Initially, the choke 2 has a high resistance and the current through the choke 2 to the condenser 4 is small. Then the resistance begins to drop and the current increases. Finally, choke 2 is saturated and the energy accumulated in it begins its release with reverse polarity. Thus, almost the same energy is generated, but with the opposite sign and the energy additionally charges the condenser 4 and improves the efficiency of the circuit. When the choke 2 is discharged, the rectifier 3 becomes clogged and no current flows through the choke 2 and condenser 4. This time is calculated and set in the system. If necessary, this time is changed by selecting choke windings 2 or changing the capacitance of condenser 4 by adding or excluding part of its condenser 4 construction.

In the system, according to the invention, the following basic operations are performed:
- treatment by high-voltage discharge of the incoming feedstock into the reactor 8 in a so called high-voltage discharge zone, formed around the electrodes 6 in the reactor 8, which has a high pressure - from 10,000 to 100,000 bar and a high temperature - in the range of 10,000 to 40,000 °C. Under these conditions in the discharge zone are formed several concentric zones of propagation of damping hydro waves. After passing the high-voltage pulse, the reverse movement of the hydro waves occurs and the opposite hydraulic effect takes place - an effect of implosion. The two types of waves combine in the so-called cavitation effect, which in practice affects raw materials with pressure waves, vacuum, heat impact, expansion and contraction. The electromagnetic pulse is short-term - with a duration of from 2 to 10 microseconds. The whole process takes less than 50 microseconds.

These extreme parameters cause the decomposition of all compounds in the zone of high-voltage discharge. It occurs a formation of new organic compounds substances in shock wave zones outside the high-voltage discharge. The new organic compounds are in colloidal /microscopic/ form and they are dissolved in water so that they are accessible to plants. The whole process in reactor is a result of the energy plasma formed by the powerful high voltage discharge (high voltage discharge) on the electrodes 6. The process of converting carbon dioxide into liquid fertilizer is carried out in two stages. At the first stage, carbon dioxide is decomposed into its constituent parts and at the same time occurs the simultaneous binding of these constituents in new chemical compounds. The second stage accomplishes ripening and formation of the end compounds by sedimentation of the finished product and adding the necessary ingredients, such as bacteria, mineral solutions, etc.

At the bottom of the reactor 8 for liquid fertilizer there is a nitrogen supply gland 14 and near the working electrodes 6 there is a carbon dioxide supply gland 13 directed towards the electrodes, so that it directs the gases to the electrodes 6. The gland 13 is located, for example, at a distance of about 30-100 mm from the electrodes. A gas fraction composed of nitrogen, carbon dioxide, oxygen, or other elements is fed into the lower part of the reactor 8. In the upper part of the reactor 8 is the output for finished products 10.

The settling tank 11 where the finished mix stays for a time is a horizontal cylindrical made of metal, plastic, fiberglass or other vessel. There the end mixture must stay for several days - usually 7 to 14 days. After the period of stay, if necessary, the end products can be stored for up to 1-2 years. Addition of microorganisms causes so-called bacterial "explosion", because in the tank 11 the conditions are suitable for the reproduction of microorganisms. Additional pressurized ambient air is supplied by a compressor. It contains nitrogen and oxygen. As the air bubbles in the tank, it supplies nutrients to the bacteria and also stirs and homogenizes the mixture.

During the stay in the tank, additional transformations are carried out, which are called ripening. At the bottom of the tank 11 are installed a gland for air supply 16 and outlet gland for complex liquid fertilizer 12.

The Automated Control System (ACS) (not shown in the figures) is used for addition of additives to the tank 11 and for analysis of the content of additives and nitrogen in the liquid fertilizer composition in the tank 11, as well as for analysis of nitrogen content in the raw material composition in reactor 8.

The ACS works as follows:
- sensors report the raw material composition fed in reactor 8 and pass this information to the controller. The control program as part of mentioned controller decides whether the mix of raw materials is ready by comparing it with a certain threshold for a particular soil and crop. The mix is assessed whether it is ready by measuring the concentration of nitrogen in it in various forms - amide, ammonia, nitrate. In case of need for further processing, the high-voltage discharge process is repeated. The automated control system determines the recurrence period of high-voltage discharge in the reactor based on its required frequency in relation to the current composition and the target composition of the mix;
   - sensors measure the composition of the liquid fertilizer in the tank 11 and pass the information to the controller. The control program decides if liquid fertilizer is ready. The threshold for additional add-ons is set in a control program in the Automated Control System /ACS/. For each soil and crop there are requirements corresponding to the liquid fertilizer recipe. If there is a need for additional elements, the dosing system 15 is switched on. In addition, the automated control system provides a printout for liquid fertilizer certification.

The liquid biofertilizer is characterized by suitable composition for any particular soil or crop, which includes certain ingredients, such as the types used to make it, solid raw materials and added additives. The system for production of liquid fertilizers with carbon dioxide utilization, according to the invention, works to achieve all available recipes for any particular composition.

To create comfortable conditions in a preferred embodiment of the invention, system for the production of liquid biofertilizer with the utilization of carbon dioxide, the following conditions shall be observed:
- the charge time of condenser 4 should be within 0.01 from the second to 1 (one) second.
   - the discharge time of condenser 4 should be within 1 to 10 microseconds.
   - the voltage of condenser 4 should be above 30 kV.
   - the voltage of condenser 4 can be adjusted from 30 to 50 kV.
   - the pulse following time can be adjusted from 0.01 to 1 second.
   - the amount of supplied carbon dioxide and nitrogen should be regulated.

The dosing system for solids 7 is a cylindrical vessel with conical bottom, supplied with a metering valve or auger installed for the addition of ground solids. These substances are further broken down under the influence of high-voltage discharges and dissolve in water.

**In** the system for production of liquid biofertilizer, the technological parameters of the system are determined by:
- the distance between the electrodes located in arrester 5
- the distance between the electrodes 6 located in reactor 8
- the magnitude of the high voltage
- capacitance of the condenser group
- the shape of the electrodes 6 in reactor 8
- the shape and volume of reactor 8

The distance between the electrodes in arrester 5 determines the frequency of electrical impulses repetition in the reactor. The distance between the arrester electrodes is determined by the distance of the electrical breakthrough in the air environment, which is accepted in ordinary conditions of 3 kV/mm.

The distance between the electrodes in arrester 5 is less than the voltage distance of the electrical breakdown, for example, 20% less than the penetration distance in the air. That means, for example, for power supply of 30 kV should be supplied distance of 8 mm. The distance also depends on the supply voltage. The supply voltage value is usually divided by 8. This is a constant value under the same voltage. In practice, by adjusting this distance, it is possible to regulates the frequency of following electrical impulses. This distance will also adjust the charge level of condenser 4. In small distances, breakthroughs occur at low voltages and pulse power is limited. In long distances condenser 4 is charged to higher voltages. However, there is a risk of no discharge or unevenness of the discharge in dry air or insufficient voltage of the source.

Therefore, these air arresters are used in small system performance. For higher performance are used controllable arresters, where the frequency of discharge is determined by external devices as impulse devices, rotating discs with slits and others.

The distance between electrodes 6 in reactor 8 is mainly determined by the parameters of the environment in reactor 8:
- the magnitude of the high voltage
- capacitance of the condenser group
- the shape of the electrodes 6 in reactor 8
- the shape and volume of the reactor 8
- the recipe of the finished products in demand, etc.

Liquid biofertilizer production by the system could be done in different manners, for example, a system performance of 50 kg/h water, can be achieved with the following parameters:
- electricity consumption - 0.5 kW/h
- water consumption - 50 kg/h
- consumption of ground solid raw material - 2 kg/h
- consumption of gas raw material - 5 kg/h
- consumption of inoculants - 1 kg for a series of 10 tons
- the reactor dimensions - Φ330X1000 mm
- the voltage of 30 kV
- the distance of the electrodes in arrester 5 is 5 mm
- the distance of electrodes 6 in reactor 8 is 10 mm

In another embodiment, a capacity of 500 kg/h of water can be achieved with the following parameters:
- electricity consumption - 5 kW/h
- water consumption - 500 kg/h
- consumption of ground solid raw material - 10 kg/h
- consumption of gas raw material - 50 kg/h
- consumption of inoculants - 10 kg for a series of 100 tons
- the reactor dimensions are Φ630X1000 mm
- the voltage of 40 kV
- the distance of the electrodes in arrester 5 is 8 mm
- the distance of the electrodes 6 in reactor 8 is 25 mm

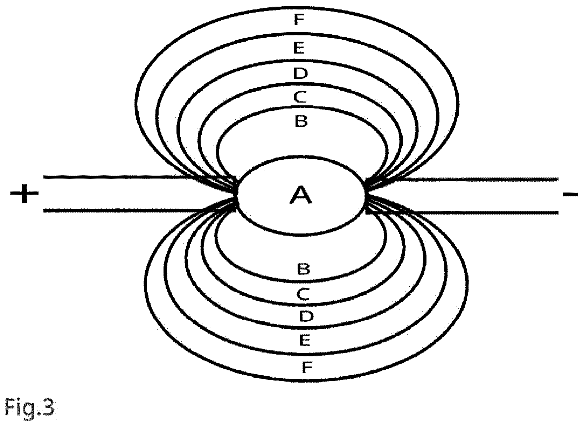

The principle of operation of the liquid biofertilizer production system is described by the following sample version:
- reactor 8 for liquid fertilizer, which has an upper and lower part in the working position, is filled with water, e.g. it can be water from river, lake, treated or waste water with suitable parameters. Preferably the water is filled from the lower part by a power supply water inlet nozzle 9 to a level at the top of the reactor 8 and pass by the installed outlet pipe 10. After that the solid ground raw materials is fed through the dosing system 7 to the top of the reactor 8;
- the power source 1 is turned to supply power to the charging circuit comprising the charging choke 2 and the high-voltage rectifier 3 (e.g. diode). The charging choke 2 accumulates inductive energy, which, after saturation, is transmitted to a high voltaic rectifier 3, which then charges the high-voltage condenser 4;
- after charging the condenser 4 to a certain level (the charge level of the condenser is determined mainly by arrester 5, it is set initially and is, for example, about 20% below the maximum supply voltage for uncontrolled arresters (so that they can always be ignited) or up to the maximum supply voltage for controlled arresters). Then the high-voltage arrester 5 is ignited and to the electrodes 6, located in reactor 8, is applied a high-voltage discharge, which is repeated over a certain period in the range from 0.1 to 1 second, depending on the power of the electrical pulse and the hardness of the raw materials, until a ready-made mixture is achieved. Accordingly, a longer period is needed for more powerful pulses and harder inputs (e.g. lignite), and a shorter period is needed for less powerful pulses and relatively softer raw materials (e.g. peat). In an exemplary embodiment of the invention, the processing of the raw materials in reactor 8 with high-voltage discharges is from 5 to 30 minutes, depending on the target concentration of the feedstock, respectively a shorter time for softer feedstock a longer time for harder feedstock.
- upon receipt of the electrical impulse, a gas mix is supplied consisting mainly of nitrogen, carbon dioxide and water, respectively, nitrogen is supplied from a nitrogen source to the inlet nitrogen gland 14 connected to the bottom of the reactor 8; carbon dioxide is supplied from a carbon dioxide source to the carbon dioxide inlet gland 13 connected to the reactor 8 near the electrodes 6; whereby during the high-voltage pulse, as a result of the powerful high voltage discharge on the electrodes 6, extreme environmental is obtained in the high-voltage discharge zone with ultra-high pressures of the range of 10,000 to 100,000 atmospheres and ultra-high temperatures in the range of 10,000 to 40,000 °C. These extreme parameters in the zone of discharge between electrodes cause formation of several concentric zones around the electrodes 6, shown in Figure 3. These are the following areas:
   - Zone A - discharge zone in electrodes 6
   - Zone B - demolition zone. It is the closest zone to zone A for solids break down and decomposition of chemically compounds
   - Zone C - zone of crushing substances and change of their geometric dimensions. It is the second zone after zone A and it is characterized by the formation of new organic compounds from substances that are broken down in Zone B.
   - Zone D - expulsion zone - this is the next zone after Zone C and it is characterized by the movement /expulsion/ of substances from zone C to the periphery
   - Zone E - contraction zone - this is the next zone after zone D and it is characterized by the contraction of the substances in it, as a result of the pressure transmitted to it from zone D
   - Zone F - attenuation zone - this is the next zone after zone E and it is characterized by a decrease in the shock wave produced in zone A, whereby the whole process occurs in less than 10 to 50 microseconds.

In the next period of time starts a new charge of condenser 4. This time is relatively longer - from 100 milliseconds to 1 second. After reaching a certain voltage level of condenser 4, arrester 5 ignites and the process is repeated over and over again. The process is continuous. The high-voltage pulses are repeated continuously until the desired mix is formed. The time is determined by the set program, depending on the sensor readings for concentration of the desired product.
- transfer of a ready-made mix of raw materials from reactor 8 to the tank 11, in which the mixed raw material remains at rest for a period of 7 to 14 days. By this time an ambient air is fed from the air inlet gland 16, which mainly supplies nitrogen and oxygen, that bubbles in the tank 11, resulting in development of nitrogen-fixing bacteria and other microorganisms. During the stay of the mixed raw material in the tank 11, several analyses are carried out for the nitrogen and the additive levels in the processed material by the sensors and the logic unit of the automated control system (not shown in the figures). This system then compares the analyzed composition of the mixed raw material with a predetermined composition intended for a given soil and a given crop. The automated control system gives a command by controller to periodically feed additional additives through the dispenser 15 in the tank 11, thus facilitate the absorption of nitrogen and micro substances by the micro-organisms that enrich the processed mixed raw material. The process ends by reaching the predetermined threshold intended for the given soil and the given crop. Additives may be, for example, strains of microorganisms, and/or micro substances, such as inoculators or other micro substances such as phosphorus, potassium, nitrogen-fixing bacteria, and other microorganisms that help plants to absorb soil nutrients. Depending on the crops, it might be also added sulfur, calcium, magnesium, zinc, manganese, humic acid salts, pH correction supplements among many others.
- obtaining a bacterial outbreak contributing to the beneficial microorganisms in tank 11, which led to an explosive development of good microorganisms and nitrogen-fixing bacteria, thus increases also the level of nitrogen in the end product;
- after the initial supply of raw materials to the tank 11 for a relevant period of stay, e.g. from 7 to 15 days, for example, 7, 8, 9, 10, 11, 12, 13, 14 or 15 days, the material is then drained through the outlet gland 12, installed at the lower end of the tank 11 and the yield is approximately the same amount end products as originally fed into the tank. Each day after the initial supply of raw material, relative the same amount is fed to the settling tank 11 where it stays, or accordingly, after draining the product from tank 11, each day the end product is approximately the same amount as the raw material. Since the long-standing raw material is heavier and the newly supplied raw material is lighter, fed to the same tank, the newly supplied production remains above, and in this way, the long-standing production is drained from the lower part of the sediment tank 11.

The described above ensures continuity of the process. i.e. new quantity of mixed raw materials is constantly being added and the end products are constantly drained, and thus the development of microorganisms is continuous. The end products can be fertilized agricultural production or the end products can be diluted, usually 1:10 for drip irrigation.

The system and method for production of liquid biofertilizer provide:
- easy assimilation of the finished liquid biofertilizer
- high concentration of nutrients for plants
- negative carbon footprint of the whole production
- presence of molecular carbon

The system for production of liquid biofertilizer by utilization of carbon dioxide can be used in agriculture to fertilize the production process. It is especially useful for growing organic products, vegetables, cereals and others. Described production process of biofertilizer requires no chemical and emits zero emissions. The main additives for this production are water, nitrogen from the air, carbon dioxide from carbon capture devices or from air, peat or soil rich in micronutrients and inoculants. All these raw materials are found in abundance in nature and are inexpensive. The use of carbon dioxide as additive allows the production of liquid biofertilizer to be carried out with zero emissions.

The liquid biofertilizer production system can be used to irrigate vegetables, spices, flowers or greenhouse products.

Also, the liquid biofertilizer can be sprayed with the grown plants, significantly increasing the yields.

Specialists in the field will know that they are different modifications of the system for production of liquid fertilizers with the utilization of carbon dioxide, which are also within the scope of this invention, as it is stated in the attached claims. All parts of the invention can be replaced by technically equivalent elements.

The reference numbers of technical specifications are included in the claims for the sole purpose of increasing the intelligibility of the claims and therefore, these reference numbers do not have any restrictive effect on the interpretation indicated by those reference numbers.

## Claims

1. A system for production of liquid biofertilizers with carbon dioxide utilization, including a liquid biofertilizer reactor (8) with a body having an upper and lower part in working position, between which a pair of metal electrodes (6) are located in an aqueous medium, which are isolated by high-voltage insulating means from the said reactor body (8), with a dosing system (7) connected to the upper part for the supply of solid ground raw materials, a water inlet gland (9) connected to the reactor, whereby a sediment tank (11) is intended for stay of the end products, having a working position in which there is an upper and lower end, wherein the connection to the upper part of the reactor (8) through an outlet pipe (10) for mixed ground raw materials is connected to the sediment tank (11) of the finished product, having working position in which there is an upper and lower end, as the connection to the reactor (8) is at the upper end of the settling tank (11) and at the lower end of the sediment tank (11) is installed an outlet gland for end products (12), wherein the system also has a power source (1) for a current connected for supplying a high-voltage voltage through a high-voltage rectifier (3) to a high-voltage condenser (4) connected through a high-voltage arrester (5) to the first electrode of the pair of electrodes (6) configured for electrical discharge in a high-pressure and high-temperature zone located between those electrodes (6) in the reactor body (8), whereby the high-voltage condenser (4) is connected to the second electrode of the pair of metal electrodes (6) through a common connection point to provide a mass also connected to the power source (1), **characterized by** the fact that a charging choke (2) is located and connected between the power source (1) and the high-voltage rectifier (3), configured to form a resonant circuit to limit the charge current of the condenser (4) and determine the charge time of the condenser (4), whereby to the lower part of the reactor (8) is directed at the electrodes (6), as reactor (8) is connected to automated control system configured to analyze by means of nitrogen level sensors located in the reactor (8) to comparing through a logical block the real values with the preliminary specified reference values, wherein the automated control is also connected to the sediment tank (11) and is configured to analyze by means of sensors located in the sediment tank (11) the nitrogen levels in the processed mixed raw material and to compare them through logical block with predefined reference values.

2. System for production of liquid biofertilizers with carbon dioxide utilization according to claim 1, **characterized in that** at the lower end of sediment tank (11) is installed an air inlet gland (16) under pressure from a compressor.

3. System for production of liquid biofertilizers with carbon dioxide utilization according to each of the preceding claims, **characterized by** the fact that a dosing system (15) is connected to the upper end of the sediment tank (11) to receive periodic commands for supply of additives to the processed raw material, wherein commands are given from controller of automated control system connected to the sediment tank (11) as the control system is able to analyze through sensors the levels of additives and to compared them through a logical block with a pre-existing reference values.

4. System for production of liquid biofertilizers with carbon dioxide utilization according to each of the preceding claims, **characterized in that** the automated control system also includes:
- a database configured to archive large data base from analyses and additions of add-ons,
- a communication module related to remote control from external device, and
- a data processor configured to the visualize the data on a visualizing device.

5. System for production of liquid biofertilizers with carbon dioxide utilization according to each of the preceding claims, **characterized in that** the water inlet gland (9) is connected to the bottom of reactor (8).

6. Method for production of liquid biofertilizer by utilization of carbon dioxide including the following steps:
- loading water and a mix of solid ground raw materials into liquid biofertilizer reactor (8);
- supplying a powerful electrical impulse to the electrodes (6) in reactor (8), which is repeated until reaching the predetermined target nitrogen concentration in the mix of raw materials, analyzing the composition of the raw materials during a certain period in the range of 0.1 to 1 second, depending on the power of the electrical impulse and the hardness of the raw materials, as a result of this, creating an area for processing the incoming raw materials in the reactor (8) by high-voltage discharge for a period of 5 to 30 minutes, under a high pressure - in the range of 10,000 to 100,000 bar and high temperature - in the range of 10,000 to 40,000 °C, at which cavitation occurs in reactor (8);
- simultaneously with the processes of high-voltage treatment through the heat impact and cavitation in the reactor (8), gas supply is carried out as a mix of nitrogen, carbon dioxide and water entered in reactor (8), which contributes to the destruction of solids and breakdown of chemical compounds, as well as formation of new organic compounds by the substances disintegrated in reactor (8);
- transfer of the end mix of raw materials from the reactor (8) to the upper end of sediment tank (11);
- stay of the end mix in the settling tank (11) for a period from 7 to 14 days, whereby in the mixed raw material are grown nitrogen-fixing bacteria and other microorganisms;
- periodic analysis of the mixed raw material during its stay in the tank (11) of the nitrogen levels in the processed material, as data from sensors located in the tank (11) are fed to the logic unit of an automated control system that compares the analyzed composition of the mixed raw material with a predetermined composition intended for a given soil and a given crop;
- when reaching the predetermined composition intended for a given soil and a given crop, the end product is taken out of the lower end of the sediment tank (11).

7. Method for production of liquid biofertilizer by utilization of carbon dioxide according to claim 6, **characterized in that** the tank (11) is fed under pressure with atmospheric air through a compressor, as the air bubbles in the tank to mix and homogenize the mixed raw material.

8. Method the production of liquid biofertilizer by utilization of carbon according to each of the claims 6 to 7, **characterized in that** in tank (11), a periodic analysis of the mixed raw material is carried out in accordance with the residence time, analyzing the levels of microsubstances and microorganisms in the processed mixed raw material, as data from sensors in the tank (11) are fed to a logic unit of an automated control system, which compares the analyzed composition of the mixed raw material with the preliminary composition intended for a given soil and a given crop and command adding additives into the tank (11) until the content reaches the predetermined threshold intended for the given soil and a given crop.

9. A method for production of liquid biofertilizer by utilization of carbon dioxide according to each of claims 6 to 8, **characterized in that** all the analysis information and the given commands for additives are archived in a data base.

10. A method for production of liquid biofertilizer by utilization of carbon dioxide according to each of claims 6 to 9, **characterized in that** the processed data from analysis and the given commands are visualized on a visualization device.

11. A method the production of liquid biofertilizers by carbon dioxide utilization according to each of claims 6 to 10, **characterized in that** the high-voltage discharge zone in the reactor (8) has the following consecutive zones around the electrodes (6):
- Zone A - discharge zone in the electrodes (6);
- Zone B - zone of destruction of solids and breakdown of chemical compounds, as carbon dioxide decomposes into carbon and oxygen and water decomposes into hydrogen and oxygen;
- Zone C - zone of synthesis of new organic compounds by substances, decayed in zone B, whereby carbon and nitrogen bind and pass into the urea part of the liquid biofertilizers and oxygen and hydrogen bind and pass in the nitrate part of liquid biofertilizers;
- Zone D - zone of expulsion of substances from Zone B to the periphery of reactor (8);
- Zone E - zone of contraction of the substances in it due to pressure transmitted from Zone D; and
- Zone E - attenuation zone of the shock wave obtained in Zone A.
